# EUROPEAN PATENT APPLICATION

(11) **EP 2 082 643 A1**
(43) Date of publication of application: **29.07.2009**
(21) Application number: 08100808.8
(22) Date of filing: 23.01.2008
(51) Int. Cl.: A01G 9/12

(54) **Plant tray for climbing fruitplants and herbs**

(71) Applicant: Jan Frints Beheer B.V., 6269 EV Margraten (NL)
(72) Inventor: Frints, Jan Marie Hubert, 6269 EV, Margraten (NL)
(74) Representative: van Westenbrugge, Andries

(57) **Abstract**

The invention relates to a plant tray (1) for plants (4) and a composition of a plant tray and organic material. The plant tray is especially suited for climbing plants and herbs. The plant tray comprises at least a tray cell (2) for receiving a substrate (3) such as pot soil, the cell having a bottom (8) and side walls (6,7) surrounding an opening. The cell extends in a longitudinal direction and a transverse direction. The plant tray further comprises a support for the climbing plants. The support includes a frame (14) extending at least in a longitudinal direction, the support mounted to the tray such that it extends away from the opening of the cell. Organic material such as pot soil can be received in the cell. Cultivations of climbing plants can be planted in the substrate. The cultivations comprise at least two species from the group of fruit developing climbing plants.

## Description

The invention relates to a plant tray for climbing plants, and in particular to a portable plant tray for climbing fruitplants and herbs.

It is known to have a plant tray having at least one cell, the cell comprising a bottom and sidewall, wherein a substrate such as pot soil can be received. Such a plant tray can be used as a carrier for one or more plants. The carrier can have multiple places for the plants. Plants can be planted in a substrate, the substrate received in the tray or carrier. It is also possible to sow seeds in the substrate. It is known to have more than one kind of plants in one plant tray.

It is also known to grow climbing plants with the help of a stiff element such as a pole. The pole can be used by the vines of the climbing plant to grow vertically upwards away from the substrate. Such a stiff element can be placed in the substrate and if it is pushed inwards far enough into the substrate, it will keep its upright position even when the climbing plant grows along the pole.

It is desirable to develop a device for organic growth stimulating especially children or the young people to eat fruits. Especially children or young people will be stimulated to eat fruits, in particular when they are engaged in the development and growth of the fruits. It is therefore a goal of the invention to provide a breeding ground for fruits that is highly attractive and healthy in particular to children and young people.

This goal is achieved according to the invention by providing a plant tray for climbing plants and herbs having at least one cell formed by a bottom and side walls, the cell being arranged to receive pot soil for planting of climbing plants and herbs.

It is to be understood that planting of climbing plants can comprise the sowing of these plants in the form of seeds. Climbing plants according to this description will comprise climbing plants, climbing fruitplants and herbs.

According to the invention the pot tray further comprises a support comprising at least a frame extending in a longitudinal and/or in a transverse direction for supporting the vines of climbing plants, the support mounted to the tray such that it extends away from the opening of the cell. In this way a plant tray is provided that can support climbing trees, wherein the climbing trees can form a hedge along the surface of the frame. This is a particularly attractive arrangement allowing the growth of the climbing trees over a larger surface provided by the frame. The developing plants will offer a attractive environment and will form a point of interest for children.

The support can be a hoisting frame. The hoisting frame can have longitudinal and transverse beams that can be used to support vines of climbing trees for in particularly a vertical and horizontal support.

A preferred embodiment has a rectangular plant tray, wherein the support extends over the long side of the plant tray. This provides in particular attractive arrangement for the growing hedge.

The pot tray according to the invention is portable. The plant tray according to the invention has in an embodiment an arm that extends from the plant tray and the arm forms the carrier arm. A user can engage the carrier arm and carry the plant tray. According to a preferred embodiment the carrier arm and support for the climbing plants are integrally formed. The carrier arm is part of the support. In an embodiment a beam of the support is also an arm of the carrier arm.

In a further preferred embodiment the arm is connected to a side wall and extends through an opening in the side wall, this allows a more rigid construction in particularly a stiff connection between the arm and the plant tray and offers a solid support for the support for the climbing plants.

In an embodiment according to the invention, the side wall tapers toward the bottom. In this tapered side wall the arm is connected to the side wall, and extends in particularly through the side wall. This allows an easy connection of an arm to the plant tray.

A preferred embodiment of a plant tray provides stackable plant trays, wherein the carrier arm is arranged as a support for a further plant tray to be stacked thereupon. This allows saving of volume during transport.

According to the invention pot soil is received in the plant cell, and at least one cultivation of a plant is planted in the cell, wherein the cultivation of a plant is a climbing plant. This allows the development of a hedge according to the invention.

In a preferred embodiment at least two and preferably at least three different cultivations of plants for climbing plants are planted in the substrate allowing the development of a hedge consisting of different plants. This will result in a further attractive arrangement of the plant tray according to the invention. Children will be fascinated by the hedge consisting of different kinds of climbing plants, in particular fruit growing plants. According to a preferred embodiment the planted cultivations or sowed seeds in the plant tray comprise at least two different members of the group of fruit growing plants. This will allow to grow a collection of different fruits in one plant tray, in a preferred embodiment a hedge of two or more fruit developing plants, resulting in an attractive embodiment specifically for children.

It is further preferred that at least one of the plants belong to the group of woody crops. The vines of these woody crops are particularly suited for forming a hedge on the frame of the plant tray according to the invention.

According to the invention the plant tray further comprises other plants for growing low growing plants, in particularly surrounding the formed hedge. This will allow an arrangement of growing plants in a more or less pyramid or triangle arrangement. The hedge is preferably formed in or close to the middle of a rectangular plant tray.

It is further preferred that the supports and/or the arm is/are formed of a biodegradable material, in a preferred embodiment of bamboo-cane. The frame in particular the hoisting frame is composed according to an embodiment of biodegradable chrysanthemum gauze. This will allow to obtain a plant tray that is fully compostable having a biodegradable frame which will allow easy removal of that frame and the vines connected therewith. The frame and the vines can be dumped in a biological dumping site.

Woody crops of fruit producing plants comprise:
kiwi fruit (Actinidia arguta) + c.v.;
kiwi fruit (Actinidia deliciosa) + c.v.;
Aronia melanocarpa + c.v.;
cornel (Cornus màs) + c.v;
quince (Cydonia oblonga) + c.v.;
fig (Ficus carica) + c.v.;
Hippophae rhamnoides + c.v.;
medlar (Mespilus germanica) + c.v.;
white/black/red Mulberry (Morus alba/nigra/rubra) + c.v.;
japanese pear (Pyrus pyrifolia) + c.v.;
josta berry (Ribes Jochina/Josta) + c.v.;
red-white-pink currant (Ribes Rubrum red, white and pink) + c.v.;
gooseberry (Ribes uva-cripsa) + c.v.;
worchesterberry (Ribes Worchesterbes) + c.v.;
Rubus + c.v.;
Arctic raspberry (Rubus articus/anticus subsp stellanticus) +c.v.;
blackberry raspberry (Rubis Bedford Giant / Boysonberry / Fructicosus / Idaeus / Loganberry / Tayberry / Thornless / Boysonberry/Thornless Loganberry + c.v.;
elderberry (Sambucus nigra) + c.v.;
blueberry cranberry bilberry foxberry (Vaccinium angustifolium / corymbosum / macrocarpon / myrtillus / vitus-idaea + c.v.;
grape (Vitis) + c.v.;
winegrape (Vitis vinifena) + c.v.

Verdant crops comprise:
lemon vervain (Aloysia Triphylla) + c.v.;
English daisy (Bellis Triphylla) + c.v.
Fennel (Foeniculum Vulgare) + c.v.
Strawberry (Fragaria) + c.v.;
Pineapple strawberry (Fragaria x Ananassa) + c.v.;
Lady's bedstraw (Galium Odoratum) + c.v.;
Aztec sweet herb (Lippia Dulcis) + c.v.;
Argentinean mint (Lippia Polystacha) + c.v.;
Lemon balm (Melissa Officinalis) + c.v.;
spearmint (Mentha Spicata) (i.e. Moroccan)+ c.v.;
gingermint (Mentha Gracilis) + c.v.;
sweet cicely (Myrrhis Odorata) + c.v.
bush basil (Ocimum) (i.e. hybr. magic blue and magic white) + c.v.;
honey melon sage (Salvia Elegans) + c.v.;
pineapple sage (Salvia Rutilans) (i.e. Pineapple) + c.v.;
anise African marigold (Tagetus Lucida) + c.v.;
lemon thyme (Thymus Citriodorus) + c.v.;
garden nasturtium (Tropaeolum Majus) + c.v.

The invention also provides a plant tray that is more attractive. The plant tray comprises at least a tray cell receiving a substrate such as pot soil therein, the cell having a bottom and side walls surrounding an opening, the cell extending in a longitudinal direction and a transverse direction, the plant tray further having a support for the climbing plants, wherein the plants are planted in the substrate comprise at least two or at least three species from the group of fruit developing climbing plants.

In a preferred embodiment the group is further limited to woody crops. In a still further preferred embodiment further herb plants are planted in the cell from the group of low growing plants. This will allow to develop a hedge of climbing plants surrounded by low growing plants.

It will be clear from the above that the invention allows many different embodiments. The skilled person will be able to adapt the preferred embodiments according to the description without departing from the scope of the invention. Different aspects of the embodiments are described herein with explicit and implicit advantages. Divisional applications directed at these advantages are possible.

The invention will now be described in further detail with reference to the drawing wherein:
Fig. 1 shows a perspective view of a first embodiment according to the invention,
Fig. 2 shows a second embodiment of a plant tray according to the invention,
Fig. 3 shows a detailed view according to arrow III in Fig. 1.

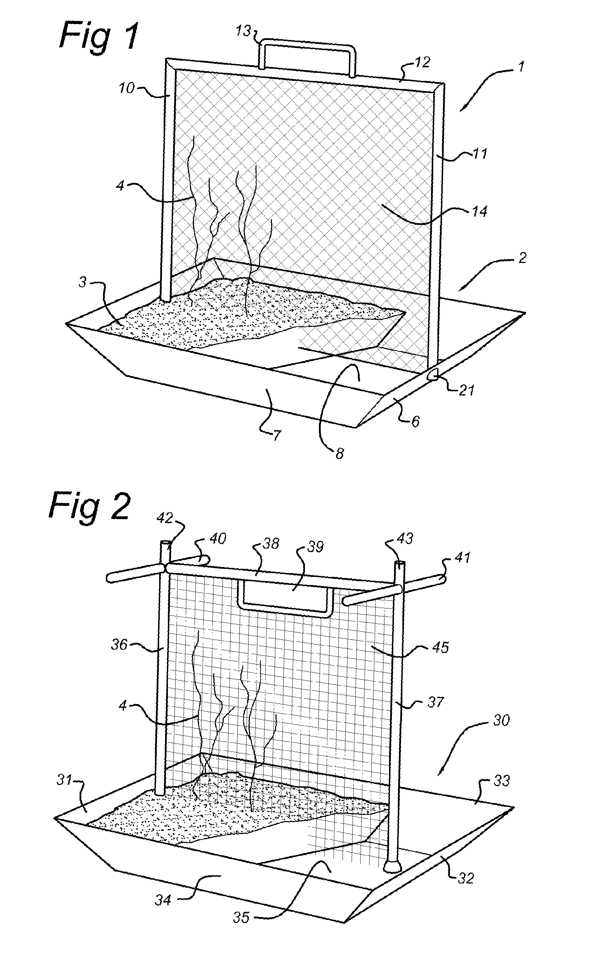

Fig. 1 shows a plant tray 1 having a cell 2 filled with substrate 3 such as pot soil wherein seeds are sowed for climbing plants 4. The plant tray 1 comprises side walls 6, 7 and a bottom, forming the cell with an opening directed upwards that can be filled with substrate 3. It is possible to have multiple cells that can receive the pot soil that are separated from each other.

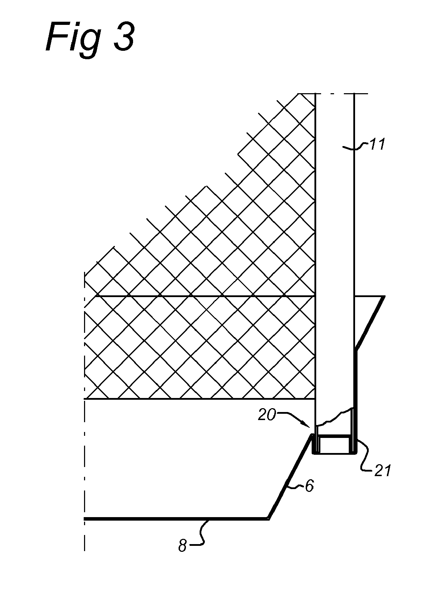

The side walls 6, 7 taper towards the bottom end of the plant tray 1. This is shown in more detail in Fig. 3. Bottom 8 has a surface area that is smaller than the opening formed by the side walls 6, 7 for receiving the substrate 3.

The plant tray 1 has two arms 10, 11 that point away from the bottom end of the plant tray. Arms 10, 11 are connected to each other by a transverse beam 12. This beam is provided with a handle 13. This allows a user to carry the portable pot tray.

In between the arms 10, 11, 12 a hoisting frame 14 having diagonal threads and is shown forming the support for the lines 4 of climbing plants.

Arm 11 is received in an opening 20 in side wall 10 having a notch 21 extending through the side wall 6 outside. Notch 21 is formed in such a way that lifting the arm 12 by handle 13 will ensure lifting the complete plant tray 1.

The beams 11, 10 and 12 are composed of biodegradable material such as bamboo-cane. The hoisting frame 14 is composed of chrysanthemum gauze. This is also a biodegradable material.

In an embodiment the side walls 6, 7 and bottom 8 are composed of a biodegradable material. This allows obtaining a completely biodegradable pot tray for climbing plants.

Although Fig. 1 shows a separate handle 13 for gripping tray, it will be clear that the tray can also be lifted without such a handle. A very suitable arrangement is a combination of a gauze 14 having a large grid, large enough for allowing the passage of part of the fingers of the person lifting the tray by grabbing the beam 12. Fig. 2 shows yet another embodiment for lifting the tray.

Fig. 2 shows a second embodiment of a plant tray 30 having side walls 31, 32, 33 and 34 and a bottom 35. Connected to the bottom are beams 36, 37 extending upwards pointing away from the bottom and the opening formed by the side walls for receiving the substrate such as pot soil. A transverse beam 38 connects the arms at a distal end and is provided with a handle 39. On top of the arms 36, 37 a second transverse beam 40, 41 is provided. These beams 40, 41 can support a second plant tray 30 positioned on top of the frame. The beams 40 and 41 are provided with a pin 42, 43 pointing away from the bottom. The pins 42 and 43 can be received in an opening provided in the bottom 35 of a plant tray 30 which will ensure a more stabile stacking of these plant trays.

In between the frame 36, 37, 38 a support of horizontal en vertical threads 45 is formed for supporting the lines of climbing plants that are showed in the cell formed in between the side walls 31-34 and bottom 35.

## Claims

1. Plant tray for plants including climbing plants, comprising at least a tray cell for receiving a substrate such as pot soil, the cell having a bottom and side walls surrounding an opening, the cell extending in a longitudinal direction and a transverse direction, the plant tray further having a support for the climbing plants comprising a frame extending at least in a longitudinal direction, the support mounted to the tray such that it extends away from the opening of the cell.

2. Plant tray according to claim 1, wherein the support is a hoisting frame.

3. Plant tray according to claim 1 or 2, wherein the plant tray is a rectangular plant tray, wherein the support extends over the long side of the plant tray.

4. Plant tray according to any of the claims 1-3, wherein the plant tray comprises an arm that extends from the plant tray forming a carrier arm of the plant tray.

5. Plant tray according to claim 4, wherein the support being connected to the plant tray and wherein the support forms a carrier arm for the tray.

6. Plant tray according to any of the claims 1-5, wherein the support is connected to the side wall and extends through an opening in the side wall.

7. Plant tray according to claim 6, wherein the side wall extends tapered from the opening to the bottom.

8. Plant tray according to any of the claims 1-7, wherein the plant trays are stackable, wherein the carrier arm is a support for a further stacked plant tray.

9. Plant tray according to any of the claims 1-8, wherein pot soil is received in the tray cell and at least one cultivation of a climbing plant.

10. Plant tray according to any of the claims 9, wherein the climbing plant is developed into a hedge supported by the support.

11. Plant tray according to claim 9 or 10, wherein a combination of at least two different cultivations from the group of climbing plants are planted in the pot soil.

12. Plant tray according to claim 11, wherein the group of climbing plants is limited to fruit developing plants.

13. Plant tray according to claim 12, wherein the group of climbing plants is limited to woody crops.

14. Plant tray according to any of the claims 9-13, wherein in the cell further cultivations for low growing plants are planted in the pot soil.

15. Plant tray according to any of the claims 1-14, wherein the support is composed of a biodegradable material.

16. Plant tray according to claim 15, wherein the biodegradable material is bamboo-cane.

17. Composition of plant tray and organic material, the plant tray comprising at least a tray cell receiving a substrate such as pot soil therein, the cell having a bottom and side walls surrounding an opening, the cell extending at least in a longitudinal direction and transverse direction, the plant tray further having a support for the climbing plants, wherein the organic material comprises cultivations planted in the substrate, the cultivations comprising at least two species from the group of fruit developing climbing plants.

18. Composition according to claim 17, wherein the cultivations further belong to the group of woody crops.

19. Composition according to claim 17 or 18, wherein the cultivations further comprise cultivations plants from the group of low growing plants.
